# EUROPEAN PATENT SPECIFICATION

(11) **EP 3 216 660 B1**
(45) Date of publication and mention of the grant of the patent: **15.05.2019**
(21) Application number: 15856785.9
(22) Date of filing: 15.10.2015
(51) Int. Cl.: B60S 1/28, B60S 1/08, B60S 1/38, B60S 1/04

(54) **WIPER SYSTEM**
WISCHERSYSTEM
SYSTÈME D'ESSUIE-GLACE

(30) Priority: 06.11.2014 JP 2014225822
(43) Date of publication of application: 13.09.2017
(73) Proprietor: Mitsuba Corporation, Kiryu-shi, Gunma 376-8555 (JP)
(72) Inventor: AMAGASA Toshiyuki, Kiryu-shi Gunma 376-8555 (JP)
(74) Representative: Hoffmann Eitle
(86) International application number: PCT/JP2015/079130
(87) International publication number: WO 2016/072233

(56) References cited:
- JP-A- H11 301 409
- JP-A- 2004 130 876
- JP-A- 2007 062 671
- JP-A- 2007 126 152
- JP-A- 2011 235 664

## Description

### Technical Field

The present invention relates to a control technique for a vehicle wiper device to be mounted on a car or the like and particularly to an interference suppression technique for wiper blades of an opposite-type (opposite wiping-type) wiper device.

### Background Art

On such a vehicle as a car, to ensure visibility of a driver in such weather conditions as raining, a wiper device is provided to wipe out raindrops on the windshield or water splashes from a car in front. In recent years, as for the vehicle wiper devices or particularly the wiper devices for automobiles, in order to increase a wiping area of a bigger windshield as well as to improve lateral visibility, so-called opposite-type wiper devices, such as those disclosed in Patent Document 1, are increasingly replacing the conventional tandem type. In the case of the opposite-type wiper devices, the rotation centers of wiper arms are set on both left and right ends of the windshield. The driver's seat-side (DR-side) wiper blade and the assistant driver's seat-side (AS-side) wiper blade operate from both sides of the windshield toward the center in such a way as to face each other, thereby wiping off raindrops and the like on the windshield.

### Prior Art Documents

### Patent Documents

[Patent Document 1] JP 11-301409A
[Patent Document 2] JP 2007-62671A

### Summary of the Invention

### Problems to be Solved by the Invention

In the case of the opposite-type wiper devices, the operation ranges of the left-hand and right-hand wiper blades broadly overlap. Moreover, the DR side and the AS side open or close at the same timing. In the conventional opposite-type wiper devices, an external force or the like could cause one blade to move over the other; if some sort of abnormalities occur in control signals, the blades could interfere with each other while wiping.

There is a proposed system (Patent Document 2) designed to prevent interference between the wiper blades at a time when abnormalities occur in the transmission of signals between motors, through a control process of narrowing the AS-side wiping area. However, such a control system is just a stopgap measure in the case of an emergency and doesn't squarely address the issue of how to prevent interference between blades. Moreover, the adoption of such a function just makes the wiper device itself more expensive. Furthermore, the opposite wiping operation is a basic option even in an emergency; an up-down turning timing is no different from usual. As a result, the AS-side wiper blade could stay at a lower-side turn point with a narrow wiping range. Another problem is that the wiping operation does not look good, even in an emergency.

### Means for Solving the Problems

According to the present invention, a wiper system of an opposite arrangement type includes: wiper blades that are disposed on a to-be-wiped surface of a vehicle in such a way as to face each other and are designed to conduct a wiping operation back and forth between lower side turn points and upper side turn points that are set on the to-be-wiped surface; and electric motors that enable the wiper blades to move back and forth on the to-be-wiped surface, wherein the wiper blades comprise a first wiper blade, which is disposed at driver's seat side, and a second wiper blade, which is disposed at assistant driver's seat side, an operation range of the second wiper blade on the to-be-wiped surface is narrower than an operation range of the first wiper blade and is set in such a way as to only partially overlap with the operation range of the first wiper blade, and the first wiper blade and the second wiper blade move in the same direction when moving back and forth for wiping.

According to the present invention, the operation range of the second wiper blade is set in such a way as to be narrower than the operation range of the first wiper blade and to overlap with the operation range of the first wiper blade only partially. As a result, the overlapping operation range of the first and second wiper blades is small, making it unlikely that the blades interfere with each other. When moving back and forth for wiping, the first and second wiper blades move in the same direction. Accordingly, compared with an opposite operation in which both blades enter an overlapping operation range simultaneously, it is more unlikely that the blades interfere with each other. Moreover, the wiping operation is smooth without stalling, because both wiper blades move in the same direction. In this case, the wiping area near the driver's seat could be an area through which only the first wiper blade passes. This helps improve the appearance of the wiping operation.

In the wiper system, a lower side turn point of the second wiper blade may be set near an outer periphery of the operation range of the first wiper blade. Moreover, as for stop positions of the first and second wiper blades when the wiper system is not operating, the stop position of the first wiper blade may be set on the side of the lower side turn point, and the stop position of the second wiper blade may be set on the side of the upper side turn point.

Furthermore, the second wiper blade may move from the upper side turn point toward the lower side turn point when the first wiper blade moves from the lower side turn point toward the upper side turn point; and the second wiper blade may move from the lower side turn point toward the upper side turn point when the first wiper blade moves from the upper side turn point toward the lower side turn point.

The first wiper blade may be longer than the second wiper blade. During a recovery operation after the first and second wiper blades come to a halt due to abnormality, the first wiper blade may be moved to the upper side turn point after the second wiper blade is moved to the upper side turn point.

### Advantages of the Invention

According to the wiper system of the present invention, the operation range of the second wiper blade is set in such a way as to be narrower than the operation range of the first wiper blade and to overlap with the operation range of the first wiper blade only partially. This makes the overlapping operation range of the first and second wiper blades smaller, preventing the blades from interfering with each other. When moving back and forth for wiping, the first and second wiper blades move in the same direction. Accordingly, it is more unlikely that the blades interfere with each other.

### Brief Description of the Drawings

FIG. 1 is an explanatory diagram showing the overall configuration of a wiper system according to one embodiment of the present invention.
FIG. 2 is an explanatory diagram showing how wiper blades work in tandem; FIGS. 2A to 2C show a forward movement of the wiper blades and FIGS. 2D to 2F show a return movement of the wiper blades.

### Embodiments for Carrying Out the Invention

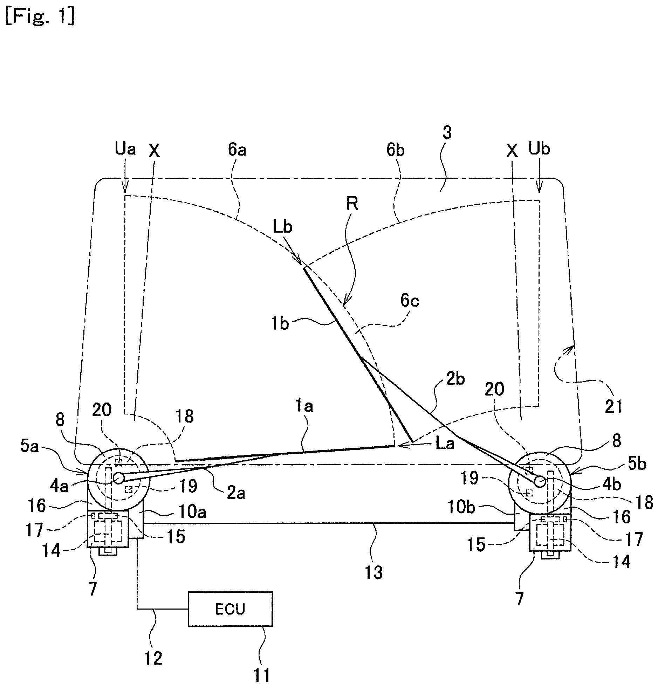

Hereinafter, an embodiment of the present invention will be detailed on the basis of the accompanying drawings. The object of the embodiment described below is to suppress interference between wiper blades without harming the appearance of the wiping operation in an opposite-type wiper device. FIG. 1 is an explanatory diagram showing the overall configuration of a wiper system according to one embodiment of the present invention. The wiper system in FIG. 1 is of an opposite type, including wiper blades 1a and 1b (first and second wiper blades; abbreviated as blades 1a and 1b): the blades 1a and 1b move back and forth between upper-side turn points Ua and Ub and lower-side turn points La and Lb in such a way as to face one another. Incidentally, the characters "a, b", which appear in the symbols of the wiper system in FIG. 1, respectively indicate the members, portions and the like that are associated with the driver's seat side and the assistant driver's seat side.

The blades 1a and 1b are attached to a one end side of a wiper arm 2a and that of a wiper arm 2b (the wiper arms 2a and 2b are abbreviated as arms 2a and 2b). The driver's seat-side blade 1a is longer (or can be the same in length as) than the assistant driver's seat-side blade 1b. The blades 1a and 1b are connected to the arms 2a and 2b in different manners. The blade 1a is connected to the arm 2a at its lower side (lower side turn point-side), and is supported by the arm 2a from below. The blade 1b is connected to the arm 2b at its upper side (upper side turn point-side), and is supported by the arm 2b from above). The arms 2a and 2b incorporate spring members and other components that are not shown. The blades 1a and 1b are elastically pushed up by these spring members and other components against a windshield 3.

The other end sides of the arms 2a and 2b are attached to wiper shafts (pivot shafts) 4a and 4b, which are disposed on both left and right end sides of the windshield of the car body. The wiper shafts 4a and 4b are driven and rotated by electric motors 5a and 5b (abbreviated as motors 5a and 5b). The arms 2a and 2b swing by the rotation of the wiper shafts 4a and 4b. As the arms 2a and 2b swing, the blades 1a and 1b move back and forth for wiping within operation ranges 6a and 6b.

The motors 5a and 5b include a motor body 7 and a deceleration mechanism 8. The motors 5a and 5b rotate in a forward or reverse direction by PWM duty control by wiper control devices 10a and 10b. The wiper control device 10a, which drives and controls the motor 5a, is connected to a vehicle-side controller ECU 11 via an in-vehicle LAN 12. Among the information that is input from the ECU 11 to the wiper control device 10a via the LAN 12 are information about ON/OFF of wiper switches, switch information such as Lo, Hi, INT (intermittent movement), and engine start information. The wiper control devices 10a and 10b are connected together via a communication line 13.

The motors 5a and 5b are feedback-controlled (PI-controlled) on the basis of position information of the blades 1a and 1b. In the case of the present embodiment, target speeds of both blades have been set in line with locations of the blades 1a and 1b. The target speeds are stored on the wiper control devices 10a and 10b in the form of maps or the like in advance. In order to make the feedback control possible, the motors 5a and 5b have a multipolar magnetized magnet 15 on a motor shaft 14, and a hall IC 17 within a case frame 16 for detecting relative positions. The hall IC 17 outputs pulse signals as the motor shaft 14 rotates. On a reduction gear 18 on which the wiper shaft 4a or 4b is mounted, an absolute position detection magnet 19 is placed. The case frame 16 has a hall IC 20, which faces the magnet 19.

The absolute position detection magnet 19 faces the hall IC 20 when the blade 1a or 1b reaches reference position X (which is set just ahead of an upper side turn point in this case). The wiper control devices 10a and 10b recognize the absolute positions of the blades 1a and 1b from signals output from the hall ICs 20. The wiper control devices 10a and 10b learn the rotation frequency and speed of the motor shafts 14 by using pulse signals from the hall ICs 17. The wiper control devices 10a and 10b then detect the travel speeds of the blades 1a and 1b as well as their angles (current positions) with respect to reference position X. Then, the wiper control devices 10a and 10b compare the current speeds of the blades 1a and 1b with the target speeds of the same at these positions of the blades 1a and 1b. The wiper control devices 10a and 10b control the motors 5a and 5b appropriately, depending on the differences between the target speeds and the current speeds. Control information pieces of both motors 5a and 5b are exchanged between the wiper control devices 10a and 10b via the communication line 13. The motors 5a and 5b are synchronously controlled on the basis of the positional relations between both blades.

In the wiper system of the present invention, the operation range 6b of the AS-side blade 1b is set in such a way as to only partially overlap with the operation range 6a of the DR-side blade 1a. The operation range 6b shares only a slight area with the operation range 6a. The operation range 6b is made narrower than the operation range 6a in such a way as to avoid the operation range 6a. An overlapping operation range 6c of the blades 1a and 1b is smaller than that of a conventional opposite-type wiper device. The lower side turn point Lb of the blade 1b is set in the vicinity of outer periphery R of the operation range 6a of the DR-side blade 1a. The operation range 6b slightly overlaps with the right end side of the operation range 6a in FIG. 1.

In this wiper system, the blades 1a and 1b operate in tandem and turn at the same timing. That is, when the blade 1a moves from the lower side turn point La toward the upper side turn point Ua, the blade 1b travels from the upper side turn point Ub toward the lower side turn point Lb. When the blade 1a moves from the upper side turn point Ua toward the lower side turn point La, the blade 1b travels from the lower side turn point Lb toward the upper side turn point Ub. The blades 1a and 1b move in the same direction when wiping the windshield 3. The "same direction" as used herein means the direction of travel of the blade 1a or 1b from each of its stop positions, in the horizontal direction in FIG. 1.

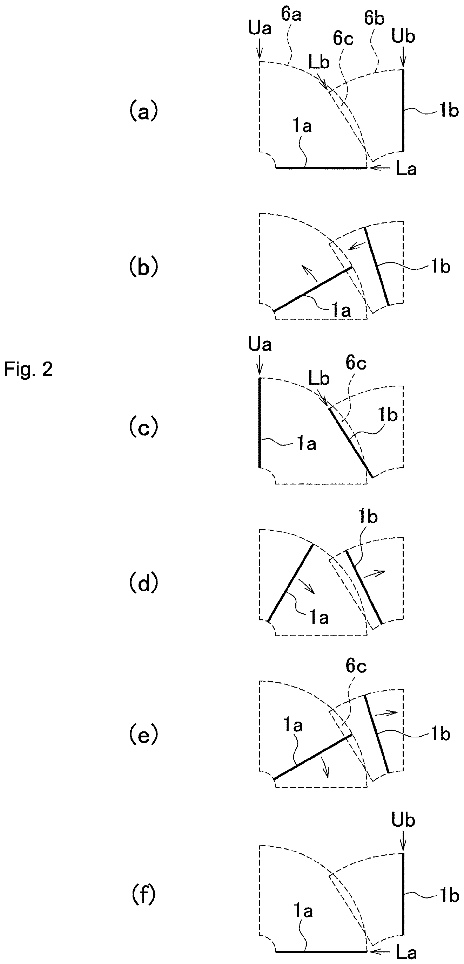

FIG. 2 is an explanatory diagram showing the tandem operation of the blades 1a and 1b; FIGS. 2A to 2C show a forward movement of the blades 1a and 1b, and FIGS. 2D to 2F show a return movement of the blades 1a and 1b. FIG. 2A shows a state where the system is stopped. At this time, the blade 1a is at lower side turn point La (or storage position), and the blade 1b is at upper side turn point Ub. That is, the blades 1a and 1b are usually positioned separately, at the upper and lower sides, when the system is stopped. Unlike typical wiper devices, the stop position of the blade 1b is set near a pillar 21 of the windshield 3.

Once a wiper switch is turned on, the blade 1a starts moving toward the upper side turn point Ua from the system stop state shown in FIG. 2A; the blade 1b moves toward the lower side turn point Lb (FIG. 2B). At this time, the blade 1b is moved at a slower pace than the blade 1a. The blade 1b reaches the lower side turn point Lb after the blade 1a passes the overlapping operation range 6c. When the blade 1b reaches the lower side turn point Lb, the blade 1a, too, reaches the upper side turn point Ua, thereby completing the forward movement (FIG. 2C).

During the return movement, the blade 1a moves from the upper side turn point Ua toward the lower side turn point La, and the blade 1b travels from the lower side turn point Lb toward the upper side turn point Ub (FIG. 2D). The blades 1a and 1b simultaneously start from the upper side turn point Ua and the lower side turn point Lb, respectively. The blade 1b moves out of the overlapping operation range 6c before the blade 1a reaches the overlapping operation range 6c. The blade 1a reaches the overlapping operation range 6c after the blade 1b has retreated, and continues to move toward the lower side turn point La (FIG. 2E). The blade 1b, too, heads to the upper side turn point Ub. The blades 1a and 1b reach the lower side turn point La and the upper side turn point Ub, respectively, at the same time (FIG. 2F).

As described above, in the wiper system of the present invention, the operation range 6b of the AS-side blade 1b only partially overlaps with the operation range 6a of the DR-side blade 1a. As a result, the overlapping operation range 6c of the blades 1a and 1b is small, making it harder for both blades to interfere with each other. Despite the wiper devise being of an opposite type, the small overlapping operation range 6c enables the tandem operation of the blades 1a and 1b. That is, the blade 1b enters the overlapping operation range 6c after the blade 1a passes; the blade 1a enters the overlapping operation range 6c after the blade 1b moves out. Both blades operate in this manner. Therefore, compared with an opposite operation in which both blades enter an overlapping operation range at the same time, it is possible to make it harder for the blades to interfere with each other.

Furthermore, when the wiper is operating, the AS-side blade never stays at the lower side turn point. Only the DR-side blade 1a passes through a wiping area near the driver's seat. This improves the appearance of the wiping operation. The blade 1b is supported by the arm 2b from above. This makes it difficult for the arm 2b to get into the driver's view, improving the visibility and traveling feeling of the driver even in such weather conditions as raining. Moreover, the AS-side blade 1b operates at a slower pace than the DR-side blade 1a. This allows the use of a lower-speed rotation type for the AS-side motor 5b than that of the DR-side motor 5b, contributing to a cost reduction.

Meanwhile, in order to make the blade 1b stop in the overlapping operation range 6c without fail, the motor 5b is equipped with a mechanical stop means (rotation stop). Such a rotation stop means can take various configurations. According to the present embodiment, a stopper is disposed inside the deceleration mechanism 8 in order to forcedly halt the operation of the blade 1b. One example of the stopper is as follows. For example, a dish-shaped member is attached to the wiper shaft 4b and a projection is provided on the dish-shaped member. Moreover, another projection is provided on the case side of the deceleration mechanism 8. Both projections are designed to come into contact with each other when the blade 1b reaches the lower side turn point Lb. In this manner, the rotation of the wiper shaft 4b is stopped at that position, and the blade 1b is halted without fail at the lower side turn point Lb as well.

As described above, the wiper control devices 10a and 10b detect reference position X and learn the current positions (angular positions) of the blades 1a and 1b using pulse signals from the hall ICs 17. In such a form of control, when the blades 1a and 1b are stopped at any places other than normal stop positions due to a shutdown of power supply during the wiping operation or any other cause, the wiper control devices 10a and 10b may lose track of the blades 1a and 1b. Even in such a case, in the wiper system of the present invention, even if the AS side and the DR side are moved toward the upper side turn points simultaneously in order to return to a normal control from an abnormal stop state, the blades 1a and 1b are unlikely to interfere with each other. Even if both interfere with each other in the overlapping operation range 6c, the blade 1b would flee to the upper side turn point direction, while the blade 1a travels in such a way as to trail the blade 1b. Therefore, interference never occurs that could crash the system.

Such interference is rare, and a severe accident is therefore unlikely to occur. However the possibility cannot be completely excluded. Therefore, in order to eliminate the slightest possibility of interference in the process of recovering from abnormalities, in the case of restarting after being stopped due to abnormalities, this system causes the AS side and the DR side to operate upward in that order until both reach the upper side turn points Ua and Ub. According to such an operation, even when the blade 1a is in the vicinity of the lower side turn point La, the blade 1a passes the overlapping operation range 6c after the blade 1b has fled to the upper side turn point Ub. Therefore, interference between each of the blades does not occur. Moreover, blades 1a and 1b both pass reference position X, and the absolute positions of both are precisely learned, and a pulse count is reset to the original point. Accordingly, at a restart from a halted state in abnormality, interference between the blades is more reliably prevented, and normal control can be resumed.

According to the above-described embodiment, a pulse system is employed to detect where the blades are. However, the method of detecting the positions, speeds and other factors of blades is not limited to the one using pulses. Any sensors and measuring equipment can be used as long as they can detect the rotation angle and speed of a wiper shaft or electric motor. Moreover, according to the above-described embodiment, as a rotation stop means, a stopper is disposed within the deceleration mechanism 8. However, the configuration of the stop means is not limited to this. For example, a member meant to come in contact with the arm 2b may be placed on the car body. In this manner, a rotation stop means may be provided on an arm portion or the like, not on a motor portion.

### Explanation of Reference Symbols

1a: Driver's seat-side wiper blade (First wiper blade)
1b: Assistant driver's seat-side wiper blade (Second wiper blade)
2a, 2b: Wiper arm
3: Windshield
4a, 4b: Wiper shaft
5a, 5b: Electric motor
6a: Driver's seat-side wiper blade operation range
6b: Assistant driver's seat-side wiper blade operation range
6c: Overlapping operation range
7: Motor body
8: Deceleration mechanism
10a, 10b: Wiper control device
11: ECU
12: In-vehicle LAN
13: Communication line
14: Motor shaft
15: Multipolar magnetized magnet
16: Case frame
17: Hall IC
18: Reduction gear
19: Absolute position detection magnet
20: Hall IC
21: Pillar
R: Outer periphery of driver's seat-side wiper blade operation range
Ua: Upper side turn point (Driver's seat-side wiper blade)
Ub: Upper side turn point (Assistant driver's seat-side wiper blade)
La: Lower side turn point (Driver's seat-side wiper blade)
Lb: Lower side turn point (Assistant driver's seat-side wiper blade)
X: Reference position

## Claims

1. A wiper system of an opposite arrangement type, **characterized by** comprising:
wiper blades (2a, 2b) that are disposed on a to-be-wiped surface of a vehicle in such a way as to face each other and are designed to conduct a wiping operation back and forth between lower side turn points and upper side turn points that are set on the to-be-wiped surface; and
electric motors (4a, 4b) that enable the wiper blades to move back and forth on the to-be-wiped surface, wherein
the wiper blades comprise a first wiper blade (2a), which is disposed at driver's seat side, and a second wiper blade (2b), which is disposed at assistant driver's seat side, **characterized in that**
an operation range of the second wiper blade (2b) on the to-be-wiped surface is narrower than an operation range of the first wiper blade (2a) and is set in such a way as to only partially overlap with the operation range of the first wiper blade, and
the first wiper blade (2a) and the second wiper blade (2b) move in the same direction when moving back and forth for wiping.

2. The wiper system according to claim 1, **characterized in that**
a lower side turn point of the second wiper blade is set near an outer periphery of the operation range of the first wiper blade.

3. The wiper system according to claim 1 or 2, **characterized in that**
as for stop positions of the first and second wiper blades when the wiper system is not operating, the stop position of the first wiper blade is on the side of the lower side turn point, and the stop position of the second wiper blade is on the side of the upper side turn point.

4. The wiper system according to any one of claims 1 to 3, **characterized in that**:
the second wiper blade moves from the upper side turn point toward the lower side turn point when the first wiper blade moves from the lower side turn point toward the upper side turn point; and
the second wiper blade moves from the lower side turn point toward the upper side turn point when the first wiper blade moves from the upper side turn point toward the lower side turn point.

5. The wiper system according to any one of claims 1 to 4, **characterized in that**
the first wiper blade is longer than the second wiper blade.

6. The wiper system according to any one of claims 1 to 5, **characterized in that**
during a recovery operation after the first and second wiper blades come to a halt due to abnormality, the first wiper blade is moved to the upper side turn point after the second wiper blade is moved to the upper side turn point.

## Patentansprüche

1. Wischersystem eines Typs gegenüberliegender Anordnung, **dadurch gekennzeichnet, dass** es umfasst:
Wischerblätter (2a, 2b), die auf einer zu wischenden Fläche eines Fahrzeugs auf solche Weise angeordnet sind, dass sie einander zugewandt sind, und gestaltet sind, einen hin- und hergehenden Wischbetrieb zwischen unteren Wendepunkten und oberen Wendepunkten auszuführen, die auf der zu wischenden Fläche eingestellt sind; und
Elektromotoren (4a, 4b), die den Wischerblättern ermöglichen, sich auf der zu wischenden Fläche hin- und herzubewegen, wobei
die Wischerblätter ein erstes Wischerblatt (2a) umfassen, das an einer Fahrersitzseite angeordnet ist, und ein zweites Wischerblatt (2b), das an einer Beifahrersitzseite angeordnet ist, **dadurch gekennzeichnet, dass**
ein Betriebsbereich des zweiten Wischerblatts (2b) auf der zu wischenden Fläche schmaler ist als ein Betriebsbereich des ersten Wischerblatts (2a) und so eingestellt ist, dass er sich nur teilweise mit dem Betriebsbereich des ersten Wischerblatts überschneidet, und
das erste Wischerblatt (2a) und das zweite Wischerblatt (2b) sich in derselben Richtung bewegen, wenn sie sich zum Wischen hin- und herbewegen.

2. Wischersystem nach Anspruch 1, **dadurch gekennzeichnet, dass**
ein unterer Wendepunkt des zweiten Wischerblatts nahe einem Außenumfang des Betriebsbereichs des ersten Wischerblatts eingestellt ist.

3. Wischersystem nach Anspruch 1 oder 2, **dadurch gekennzeichnet, dass**
für Stopp-Positionen der ersten und zweiten Wischerblätter, wenn das Wischersystem nicht in Betrieb ist, die Stopp-Position des ersten Wischerblatts an der Seite des unteren Wendepunkts ist und die Stopp-Position des zweiten Wischerblatts an der Seite des oberen Wendepunkts ist.

4. Wischersystem nach einem der Ansprüche 1 bis 3, **dadurch gekennzeichnet, dass**
das zweite Wischerblatt sich vom oberen Wendepunkt zum unteren Wendepunkt hin bewegt, wenn das erste Wischerblatt sich vom unteren Wendepunkt zum oberen Wendepunkt hin bewegt; und
das zweite Wischerblatt sich vom unteren Wendepunkt zum oberen Wendepunkt hin bewegt, wenn das erste Wischerblatt sich vom oberen Wendepunkt zum unteren Wendepunkt hin bewegt.

5. Wischersystem nach einem der Ansprüche 1 bis 4, **dadurch gekennzeichnet, dass** das erste Wischerblatt länger ist als das zweite Wischerblatt.

6. Wischersystem nach einem der Ansprüche 1 bis 5, **dadurch gekennzeichnet, dass**
während eines Wiederherstellungsbetriebs, nachdem das erste und zweite Wischerblatt aufgrund einer Unregelmäßigkeit anhalten, das erste Wischerblatt zum oberen Wendepunkt bewegt wird, nachdem das zweite Wischerblatt zum oberen Wendepunkt bewegt worden ist.

## Revendications

1. Système d'essuie-glace d'un type à agencement opposé, **caractérisé en ce qu'**il comprend :
des lames d'essuie-glace (2a, 2b) qui sont disposées sur une surface à essuyer d'un véhicule de manière qu'elles soient en regard l'une de l'autre et sont conçues pour effectuer une opération d'essuyage en va-et-vient entre des points de retour côté inférieur et des points de retour côté supérieur, qui sont réglés sur la surface à essuyer ; et
des moteurs électriques (4a, 4b) qui permettent aux lames d'essuie-glace de se déplacer en va-et-vient sur la surface à essuyer, dans lequel
les lames d'essuie-glace comprennent une première lame d'essuie-glace (2a) qui est disposée côté siège du chauffeur et une seconde lame d'essuie-glace (2b) qui est disposée côté siège du passager, **caractérisé en ce que**
une plage opératoire de la seconde lame d'essuie-glace (2b) sur la surface à essuyer est plus étroite qu'une plage opératoire de la première lame d'essuie-glace (2a) et est réglée de manière à chevaucher seulement en partie la plage opératoire de la première lame d'essuie-glace et
la première lame d'essuie-glace (2a) et la seconde lame d'essuie-glace (2b) se déplacent dans le même sens lorsqu'elles se déplacent en va-et-vient pour l'essuyage.

2. Système d'essuie-glace selon la revendication 1, **caractérisé en ce que**
un point de retour côté inférieur de la seconde lame d'essuie-glace est réglée près d'une périphérie externe de la plage opératoire de la première lame d'essuie-glace.

3. Système d'essuie-glace selon la revendication 1 ou 2, **caractérisé en ce que**
en ce qui concerne les positions d'arrêt de la première et la seconde lame d'essuie-glace lorsque le système d'essuie-glace ne fonctionne pas, la position d'arrêt de la première lame d'essuie-glace se situe côté point de retour côté inférieur et la position d'arrêt de la seconde lame d'essuie-glace se situe côté point de retour côté supérieur.

4. Système d'essuie-glace selon l'une quelconque des revendications 1 à 3, **caractérisé en ce que**
la seconde lame d'essuie-glace se déplace du point de retour côté supérieur vers le point de retour côté inférieur lorsque la première lame d'essuie-glace se déplace du point de retour côté inférieur vers le point de retour côté supérieur ; et
la seconde lame d'essuie-glace se déplace du point de retour côté inférieur vers le point de retour côté supérieur lorsque la première lame d'essuie-glace se déplace du point de retour côté supérieur vers le point de retour côté inférieur.

5. Système d'essuie-glace selon l'une quelconque des revendications 1 à 4, **caractérisé en ce que**
la première lame d'essuie-glace est plus longue que la seconde lame d'essuie-glace.

6. Système d'essuie-glace selon l'une quelconque des revendications 1 à 5, **caractérisé en ce que**
au cours d'une opération de récupération une fois que la première et la seconde lame d'essuie-glace se sont arrêtées en raison d'une anomalie, la première lame d'essuie-glace est déplacée vers le point de retour côté supérieur après que la seconde lame d'essuie-glace s'est déplacée vers le point de retour côté supérieur.
